# EUROPEAN PATENT APPLICATION

(11) **EP 2 369 712 A1**
(43) Date of publication of application: **28.09.2011**
(21) Application number: 11002419.7
(22) Date of filing: 23.03.2011
(51) Int. Cl.: H02J 7/00

(54) **Battery charging apparatus**

(30) Priority: 24.03.2010 JP 2010068820
(71) Applicant: Sanyo Electric Co., Ltd., Osaka 570-8677 (JP)
(72) Inventor: Furukawa, Kimihiko, Osaka, 570-8677 (JP); Taira, Shigeharu, Osaka, 570-8677 (JP); Itagaki, Shinichi, Osaka, 570-8677 (JP); Shoji, Yoshihiro, Osaka, 570-8677 (JP); Miyazaki, Shinya, Osaka, 570-8677 (JP)
(74) Representative: Hertz, Oliver

(57) **Abstract**

The battery charging apparatus has an auxiliary battery 1, a first charging circuit 20 for charging the auxiliary battery 1 with a first charging current derived from an externally connected commercial power source AC, and a second charging circuit 30 for charging the load battery LB with a second charging current that is higher than the first charging current and is derived from power from the auxiliary battery 1, which is charged by the first charging circuit 20. The first charging circuit 20 is connected to allow power supply to the auxiliary battery 1 and the second charging circuit 30. This makes charging circuit switching unnecessary and eliminates the need for components such as high-power switching devices. The charging apparatus has the positive features that stability and reliability are improved, and the load battery can be charged with the auxiliary battery 1 in a shorter time than using commercial power.

## Description

### BACKGROUND OF THE INVENTION

### 1. Field of the Invention

The present invention relates to charging apparatus that uses commercial power to charge a load battery such as a driving battery installed on-board a vehicle that supplies power to an electric motor to drive the vehicle.

### 2. Description of the Related Art

Along with widespread acceptance of vehicles such as hybrid vehicles driven by both an electric motor and an engine and electric vehicles driven only by an electric motor, battery chargers have become necessary to charge the driving batteries in those vehicles. In particular, high demand has recently developed for vehicles such as plug-in hybrid vehicles and electric vehicles carrying high-capacity driving batteries that have considerably more battery cells than those in a standard hybrid vehicle. Consequently, battery chargers with enough capacity and charging capability to charge the batteries in those vehicles have inevitably become large-scale. Attempting to charge these types of high-capacity driving batteries simply using household commercial power is problematic due to the considerable charging time required. This is because the maximum power available from a commercial power outlet is limited. For example, the maximum usable power available from a 200V single-phase commercial power outlet is limited to approximately 5KW (in Japan). Therefore, if attempt is made to charge an electric vehicle carrying a 24kWh driving battery using commercial power, approximately 5hrs of charging time is required even with a maximum power of 5KW. To avoid this drawback, a charging apparatus has been developed housing an auxiliary battery charged by commercial power that rapidly-charges the driving battery via that auxiliary battery.

Refer to Japanese Laid-Open Patent Publication H5-207668 (1993).

As shown in Fig. 4, the battery charging apparatus cited in JP H5-207668-A is provided with an auxiliary battery 91 charged by a commercial power source 90, a charging circuit 93 that charges the auxiliary battery 91 and charges the driving battery 92 with the auxiliary battery 91, and switches 94 that switch between auxiliary battery 91 charging via the commercial power source 90 and driving battery 92 charging via the auxiliary battery 91. In this battery charging apparatus, the auxiliary battery 91 is charged by the commercial power source 90 allowing the charged auxiliary battery 91 to rapidly-charge the driving battery. In particular, by making the capacity of the auxiliary battery 91 greater than that of the driving battery 92, the driving battery 92 can be charged very rapidly.

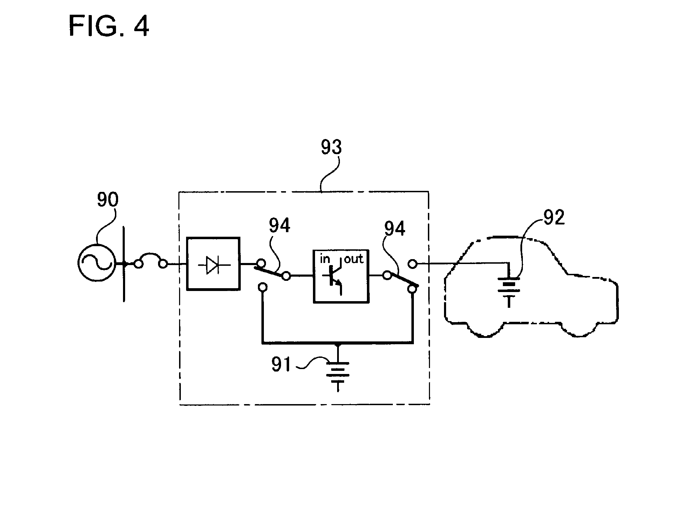

However in the charging apparatus of Fig. 4, the switches 94 switch between a state where the auxiliary battery 91 is being charged, and a state where the auxiliary battery 91 is discharged to charge the driving battery 92. Therefore, the driving battery 92 cannot be charged while charging the auxiliary battery 91. For example, it is necessary to first charge the auxiliary battery 91, and subsequently switch the switches 94 to charge the driving battery 92. If switching is performed by the operator, it is necessary to first confirm that the auxiliary battery 91 is charged. This has the drawback that the required operator confirmation and switching operations are troublesome. These types of operations can be automated, for example, by use of a timer. However, to determine the timer settings for switching the auxiliary battery between charging and discharging, computations based on auxiliary and driving battery remaining capacities are necessary, and this has the drawback that those computations are complex. This is because the time required to charge the auxiliary battery depends on auxiliary battery remaining capacity, and the time required for the auxiliary battery to charge the driving battery depends on the remaining capacity of the driving battery.

Accordingly, a charging apparatus that switches between auxiliary battery charging and discharging has the drawbacks that operation is troublesome and even in an automated configuration with a timer, computations for the timer settings are complex. Therefore, with this type of charging apparatus it is difficult to simply and easily charge the driving battery before the operator is ready to drive the vehicle.

In addition, this system necessitates mechanical implementation of the switches and has the reliability and degradation-over-time problems associated with mechanical switching. In particular, a high capacity battery is used as the auxiliary battery, and high current flow is used for rapid-charging. Mechanical switching of high currents generates problems such as arcing and contact fusing, and maintenance associated with contact degradation is unavoidable.

The present invention was developed to resolve the types of problems described above. Thus, it is a primary object of the present invention to provide a battery charging apparatus that can rapidly-charge a load battery while limiting commercial power source output, and in addition can be easily operated to conveniently charge the load battery. Another object of the present invention is to provide a battery charging apparatus that can conveniently charge both the auxiliary battery and the load battery without switching between auxiliary battery and load battery charging.

### SUMMARY OF THE INVENTION

To achieve the objects described above, the battery charging apparatus for the first aspect of the present invention is a charging apparatus to charge an externally connected load battery. The battery charging apparatus can be provided with an auxiliary battery that can be charged, a first charging circuit that can charge the auxiliary battery with a first charging current derived from an externally connected commercial power source, and a second charging circuit that can charge the load battery with a second charging current that is higher than the first charging current and is derived from power from the auxiliary battery, which is charged by the first charging circuit. The first charging circuit can be connected to allow power supply to the auxiliary battery and the second charging circuit. This makes charging circuit switching unnecessary and eliminates the need for components such as high-power switching devices. Accordingly, this charging apparatus has the positive features that stability and reliability are improved, and the load battery can be charged with the auxiliary battery in a shorter time than using commercial power. In particular, the load battery can be rapidly-charged while limiting commercial power output to a low-power, and the load battery can be conveniently charged without any switching operations. The reason the load battery can be charged in a short time while keeping commercial power output low is because the auxiliary battery is charged by commercial power and the auxiliary battery can charge the load battery.

In the battery charging apparatus for the second aspect of the present invention, the first charging circuit can be configured to allow it to charge the load battery at the same time it is charging the auxiliary battery with power from the commercial power source. Accordingly, the auxiliary battery and load battery can be simultaneously charged with commercial power. Further, both the auxiliary battery and the load battery can be charged via commercial power without switching between auxiliary battery and load battery charging. In addition, when the auxiliary battery is in a charged state, the load battery can be rapidly-charged by the auxiliary battery. Specifically, power not only from the auxiliary battery but also from the commercial power source can be used to charge the load battery. As a result, the capacity required by the auxiliary battery can be lowered and implementation cost can be reduced.

The battery charging apparatus for the third aspect of the present invention can be provided with a battery control circuit that controls charging of the auxiliary battery by the first charging circuit. The battery control circuit can control charging current and charging time according to the state of the auxiliary battery. Accordingly, the auxiliary battery can be appropriately charged to put it in a usable state by a given time. In the case where the load battery is the driving battery in a vehicle, the time required to charge the driving battery with the auxiliary battery (and the commercial power source when necessary) can be computed from the remaining capacity of the driving battery. For example, to insure full-charge of the driving battery by an 8:00 AM next-day commuting time, computation back to a start-charging time can be performed, and the required completion time for auxiliary battery charging can in turn be computed from the driving battery start-charging time. Further, when the time period for charging includes late-night (low-rate) power time, charging can be performed as much as possible at low currents with late-night power to avoid power company peak-usage times when many customers perform rapid-charging with high currents. This can contribute to the efficient use of electrical power.

In the battery charging apparatus for the fourth aspect of the present invention, the power that the second charging circuit uses to charge the load battery can be two to ten times the power that the first charging circuit uses to charge the auxiliary battery. Accordingly, the load battery can be rapidly-charged in a time that is 1/10^{th} to 1/2 the time required by direct charging of the load battery with output from the commercial power source.

In the battery charging apparatus for the fifth aspect of the present invention, the power used by the first charging circuit to charge the auxiliary battery can be 2kVA to 6kVA, and the power used by the second charging circuit to charge the load battery can be greater than or equal to 20kVA. Accordingly, the high capacity load battery can be rapidly-charged while keeping the commercial power source output in a desirable range, namely while keeping current flow in the commercial power source lines within a given range.

In the battery charging apparatus for the sixth aspect of the present invention, the first charging circuit can charge the auxiliary battery with single-phase commercial power. Accordingly, the load battery can be rapidly-charged while using single-phase commercial power.

In the battery charging apparatus for the seventh aspect of the present invention, the first charging circuit can be a constant current charging circuit. Accordingly, both the auxiliary battery and the load battery can be stably charged by the first charging circuit. In particular, regardless of the remaining capacity and voltage of the auxiliary battery and the load battery, both batteries can be charged with appropriate charging current by the first charging circuit. In addition, the auxiliary battery can be discharged to supply high-power to the second charging circuit while receiving power from the commercial power source.

The battery charging apparatus for the eighth aspect of the present invention can be provided with first transmission lines from the commercial power source through the first charging circuit to charge the auxiliary battery, and second transmission lines from the auxiliary battery through the second charging circuit to charge the load battery. Further, the second transmission lines can be lines that are capable of carrying high-power compared to the first transmission lines. Accordingly, all the transmission lines do not need to be designed to carry high-power, and only the transmission lines in a limited section need to be made as high-power lines. This allows a high capacity load battery to be rapidly-charged while simplifying circuit design and reducing cost.

In the battery charging apparatus for the ninth aspect of the present invention, charging of the auxiliary battery with the first charging circuit can be performed using commercial power source late-night power. Accordingly, the auxiliary battery can be charged by the next morning using low-rate, late-night power to hold back electric power expenses. From a power company perspective, this has the positive feature that it effectively utilizes power company nighttime surplus energy and contributes to restraining the amount of power used during daytime peak-power times.

In the battery charging apparatus for the tenth aspect of the present invention, the battery control circuit can control auxiliary battery charging power according to the remaining capacity of the auxiliary battery and the time period for late-night power. Accordingly, the auxiliary battery and load battery can be charged by effective use of late-night power. In particular, the auxiliary battery and load battery can be charged while optimally limiting the rate of power consumption during charging. In the case where many electric power customers are charging auxiliary batteries and load batteries with late-night power, this can restrain late-night power maximum-use and perform battery charging uniformly over the time period when late-night power is supplied.

In the battery charging apparatus for the eleventh aspect of the present invention, the first charging circuit can be provided with a twenty-four-hour timer set to charge the auxiliary battery with late-night power. Accordingly, the auxiliary battery and load battery can be charged by effective use of late-night power without the operator having to set the charging time.

The battery charging apparatus for the twelfth aspect of the present invention can be provided with solar cells as a power source for charging the auxiliary battery. Accordingly, the auxiliary battery can be charged by effective use of power generated by the solar cells, which provide a renewable energy source. In particular, since the load battery can be charged by solar cell energy stored in the auxiliary battery, the load battery can be charged by renewable solar energy even when the solar cells are not generating power. This has the positive feature that power can be obtained at appropriate times depending on demand.

The battery charging apparatus for the thirteenth aspect of the present invention can be provided with a data logging device to record solar cell power. Accordingly, by recording the power generated by the solar cells, solar cell power can be used more effectively, and an optimal strategy for using the solar cell power can be planned.

The battery charging apparatus for the fourteenth aspect of the present invention can be provided with a discharge control circuit that can supply auxiliary battery power back to the commercial power source. Accordingly, not only can power generated by the solar cells immediately be sold to the power company, but once power is stored in the auxiliary battery, it can be sold during a period of high demand. This can contribute to reducing strain on the power system during periods of peak-usage. Specifically, the auxiliary battery provided to charge the load battery can also serve as a temporary storage battery to store power sold back to the power company.

In the battery charging apparatus for the fifteenth aspect of the present invention, the auxiliary battery can be configured to use rechargeable batteries from load batteries no longer in use. Accordingly, even a battery, which can no longer be used as a load battery, can be effectively recycled and not discarded. In particular, in the case of a load battery requiring replacement at a time when component rechargeable batteries still have sufficient lifetime remaining, those rechargeable batteries that are still usable can be effectively employed. This can make effective use of scarce resources such as rare metals, and is extremely advantageous from the perspectives of cost and environmental preservation.

In the battery charging apparatus for the sixteenth aspect of the present invention, the auxiliary battery can be made up of a plurality of parallel-connected battery blocks. Accordingly, the total capacity of the auxiliary battery can be adjusted by adjusting the number of parallel-connected battery blocks. As a result, the capacity of the auxiliary battery can easily be set to an appropriate value for rapid-charging of the load battery.

In the battery charging apparatus for the seventeenth aspect of the present invention, the auxiliary battery can be configured with a plurality of battery blocks connected in a manner that allows disconnection. Accordingly, since battery blocks can be disconnected, a battery block that has degraded and can no longer be used can simply and conveniently be disconnected. In particular, in a charging apparatus with an auxiliary battery that is a load battery no longer in use, the system can be conveniently used by simply disconnecting inoperable battery blocks when auxiliary battery degradation occurs.

In the battery charging apparatus for the eighteenth aspect of the present invention, the auxiliary battery can be lithium ion batteries. Accordingly, high capacity allowing rapid-charging of the load battery can be achieved while making the auxiliary battery light and compact.

In the battery charging apparatus for the nineteenth aspect of the present invention, the load battery can be the driving battery installed in an automotive vehicle. Accordingly, an inexpensive system can be made available that can efficiently charge the driving battery in an electric vehicle or a plug-in hybrid vehicle at the operator's home. The above and further objects of the present invention as well as the features thereof will become more apparent from the following detailed description to be made in conjunction with the accompanying drawings.

### BRIEF DESCRIPTION OF THE DRAWINGS

Fig. 1 is a schematic diagram showing a battery charging apparatus for the first embodiment of the present invention;
Fig. 2 is a circuit diagram showing an example of the first charging circuit in Fig. 1;
Fig. 3 is a schematic diagram showing a battery charging apparatus for the second embodiment; and
Fig. 4 is a schematic diagram showing a prior art battery charging apparatus.

### DETAILED DESCRIPTION OF THE EMBODIMENTS

The following describes embodiments of the present invention based on the figures.

### (First Embodiment)

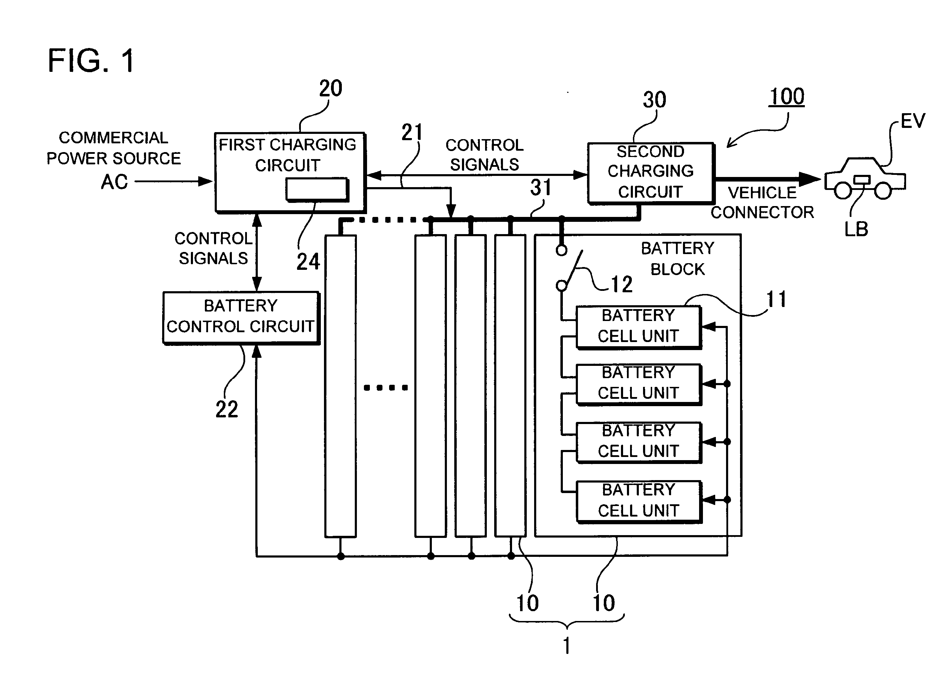

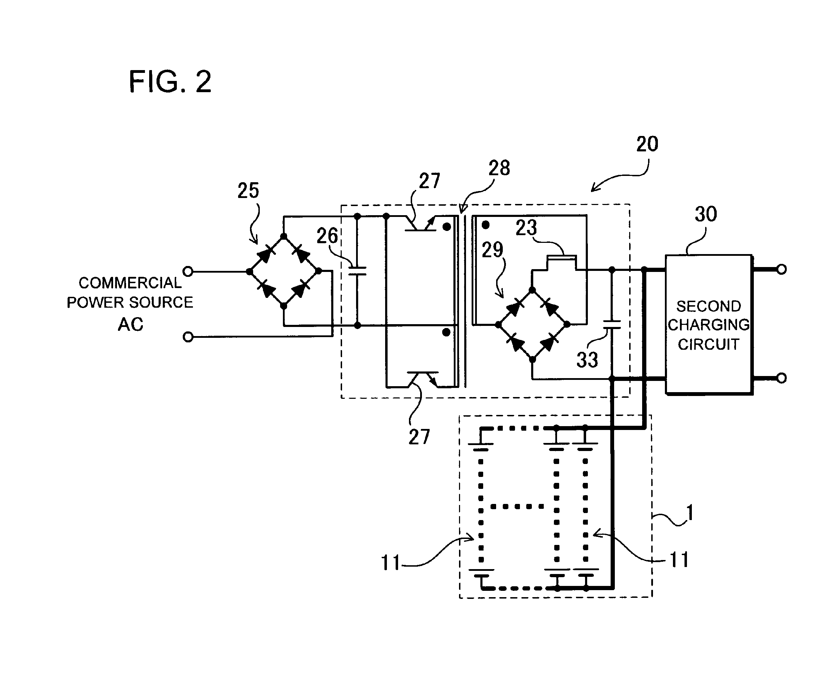

Figs. 1 and 2 show a battery charging apparatus for the first embodiment of the present invention. Fig. 1 is a schematic diagram showing the battery charging apparatus 100, and Fig. 2 is a circuit diagram showing an example of the first charging circuit 20 in Fig. 1. This embodiment illustrates power system architecture that uses commercial power available in the home to charge an auxiliary battery 1, and to charge an externally connected load battery LB. Here, charging of the driving battery in a vehicle EV such as plug-in hybrid vehicle or electric vehicle is described as an example of load battery LB charging. The battery charging apparatus 100 is provided with an auxiliary battery 1, a first charging circuit 20 that charges the auxiliary battery 1 from a commercial power source AC, a second charging circuit 30 that charges the load battery LB with the auxiliary battery 1, and a battery control circuit 22 that controls conditions for auxiliary battery 1 charging by the first charging circuit 20.

Further, first transmission lines 21 are connected through the first charging circuit 20 between the commercial power source AC and the auxiliary battery 1 to charge the auxiliary battery 1 from the commercial power source AC via the first charging circuit 20. In addition, second transmission lines 31 are connected through the second charging circuit 30 between the auxiliary battery 1 and the load battery LB to charge the load battery LB from the auxiliary battery 1 via the second charging circuit 30.

### (First Charging Circuit 20)

The first charging circuit 20 uses power from the commercial power source AC to charge the auxiliary battery 1 with first charging current. When the first charging circuit 20 charges the auxiliary battery 1, the battery charging apparatus 100 of Fig. 1 controls that charging via the battery control circuit 22. The first charging circuit 20 is a charging circuit with constant current output characteristics. In particular, this type of first charging circuit 20 can charge both the auxiliary battery 1 and the load battery LB with appropriate charging current regardless of the remaining capacity or voltage of those batteries.

### (Battery Control Circuit 22)

The battery control circuit 22 is connected to the auxiliary battery 1 and the first charging circuit 20. The battery control circuit 22 monitors the state of each battery block 10 in the auxiliary battery 1 and issues control signals to the first charging circuit 20. The first charging circuit 20 adjusts the first charging current based on the control signals from the battery control circuit 22. For example, the battery control circuit 22 detects voltages to compute the remaining capacity of each battery block 10. The battery control circuit 22 can also detect battery temperature via temperature sensors to prevent battery block 10 over-discharge. In the example of Fig. 1, the battery control circuit 22 is established as a separate entity from the first charging circuit 20. However, the battery charging apparatus is not limited to that configuration, and for example, the battery control circuit can also be built into the first charging circuit.

### (Second Charging Circuit 30)

The second charging circuit 30 charges the load battery LB with second charging current using power from the auxiliary battery 1, which is charged by the first charging circuit 20. The second charging current is set to a high current compared to the first charging current. As a result, the load battery LB can be charged in a short period with high current using the auxiliary battery 1, which is charged over a long period with low current. Specifically, the second charging circuit 30 functions as a rapid-charging battery charger.

The power that the second charging circuit 30 uses to charge the load battery LB is preferably two to ten times, and for example, approximately five times the power that the first charging circuit 20 uses to charge the auxiliary battery 1. As a result, the load battery LB can be rapidly-charged in a time that is 1/10^{th} to 1/2 the time required by direct charging of the load battery with output from the commercial power source AC. For example, if the power used by the first charging circuit 20 to charge the auxiliary battery 1 is 2kVA to 6kVA, the power used by the second charging circuit 30 to charge the load battery LB can be 20kVA or more. In this manner, the high capacity load battery LB can be rapidly-charged while keeping the commercial power source AC output in a desirable range, namely while keeping current flow in the commercial power source AC lines within a given range. For example, assume the charging power of the first charging circuit 20 is 5KW, and the charging power of the second charging circuit 30 is 25kW. In this case, the time required to charge a 24kWh driving battery is approximately 5hrs for direct charging from the commercial power source AC by the first charging circuit 20, while charging by the second charging circuit 30 can be completed within 1 hr. Consequently, the second charging circuit 30 can charge the load battery LB in a short time period to accomplish what is often referred to as rapid-charging (or fast-charging). Further, power consumption from the commercial power source AC can be restrained and cost can be reduced.

Since the charging power of the first charging circuit 20 and the charging power of the second charging circuit 30 differ in this manner, specifications for the respective transmission lines can also differ. Specifically, second transmission lines 31, which charge the load battery LB from the auxiliary battery 1 with the second charging circuit 30, are high-power lines compared to first transmission lines 21, which charge the auxiliary battery 1 from the commercial power source AC with the first charging circuit 20. As a result, all the transmission lines do not have to be designed to carry high-power, and only the transmission lines in a particular section can be made to carry high-power. This can achieve circuit design simplification and reduced cost. Normally for high-power charging circuits, large diameter connecting wires are required right from the commercial power source receptacle. These types of high-power charging circuits require installation space and have the problem that there is little freedom to route the wiring. In contrast, the present embodiment only requires large diameter wires from the auxiliary battery 1 to the load battery LB. This achieves the positive feature that compared to charging apparatus with no auxiliary battery, the present embodiment has a high degree of freedom to route charging apparatus wiring.

### (Simultaneous Charging of the Auxiliary Battery 1 and Load Battery LB)

As shown in Fig. 1, the first charging circuit 20 is permanently connected in a manner that allows it to supply power to the auxiliary battery 1 and the second charging circuit 30. As a result, the first charging circuit 20 can charge the auxiliary battery 1 with power from the commercial power source AC while simultaneously charging the load battery LB. By allowing commercial power to simultaneously charge the auxiliary battery 1 and the load battery LB, not only is charging possible in a short period, but there is also no need to wait for auxiliary battery 1 full-charge and no need for switching operations to subsequently switch to load battery LB charging. This simplifies operation compared to prior art charging apparatus. Further, switches to switch between auxiliary battery 1 charging and load battery LB charging are unnecessary, which is advantageous from a circuit design perspective. In particular, for switching high currents flowing in a charging circuit, arching and contact fusing problems result from mechanical switching operations and are detrimental to system reliability. Reliability is improved by eliminating those types of switches.

Further, in the case when the load battery LB is charged by late-night power, the load battery LB can be charged together with the auxiliary battery 1. Accordingly, by setting the system for late-night charging of the load battery LB, the load battery LB can be charged by the next morning to make the vehicle ready to drive. In contrast to prior art charging apparatus, there is no need to first charge the auxiliary battery 1 and subsequently switch to charging the load battery LB from the auxiliary battery 1. Late-night power can be effectively utilized to put the load battery LB in a charged state by the next morning. The load battery LB and auxiliary battery 1 charged in this manner do not require remaining capacity computation at the start of charging to control charging conditions. Both batteries can be charged under favorable conditions by setting the auxiliary battery 1 and load battery LB for charging via late-night power.

### (Auxiliary Battery 1)

The auxiliary battery 1 is configured with a plurality of battery blocks 10 connected in parallel. Because of this block structure, the total capacity of the auxiliary battery 10 can easily be set, depending on load battery LB capacity, to an optimal capacity for rapid-charging by adjusting the number of parallel-connected battery blocks 10. For example, in the case of charging a relatively low capacity compact-car size driving battery, the number of batteries in the auxiliary battery 1 can be reduced and system acquisition cost can be held to a minimum. For the case of a user that is relatively flexible with respect to charging time as well, the system can be set to extract more power from the commercial power source AC, and the number of batteries in the auxiliary battery 1 can be reduced to lower acquisition cost. In this manner, the number of parallel-connected battery blocks 10 can be varied depending on user-requirements.

### (Battery Blocks 10)

As shown in Figs. 1 and 2, each battery block 10 has a plurality of battery cell units 11 connected in series. Each battery cell unit 11 in-turn has a plurality of rechargeable battery cells connected in series and/or parallel. In the example of Fig. 1, each battery block 10 has four battery cell units 11, each with a 48V output voltage, connected in series to obtain a total direct current (DC) output voltage of 192V. Batteries such as lithium ion rechargeable batteries or nickel hydride batteries can be favorably used as the rechargeable battery cells. In particular, use of lithium ion rechargeable batteries, which have superior capacity per volume, is desirable. Lithium ion rechargeable batteries are advantageous for reducing system space requirements for easy installation in the home. Further, lithium ion rechargeable batteries have the positive feature that by adjusting the number of series-connected cells, individual battery cell units can easily be assembled using relatively new and old batteries.

Further, a load battery LB no longer in use can be recycled and used as an auxiliary battery 1. Specifically, rechargeable batteries included in a used load battery LB can be incorporated as battery cell units 11 in an auxiliary battery 1. Consequently, a battery that cannot be used as a load battery LB can effectively be utilized and not discarded or scrapped. In particular, when the load battery LB is a vehicle driving battery, there are strict demands on battery specifications to meet requirements such as automotive safety standards. In contrast, since the auxiliary battery 1 is not installed on-board a vehicle to drive that vehicle, those strict automotive requirements do not apply. Therefore, even when actual battery capacity has degraded to the extent that exempts use as a driving battery, the battery can still effectively be used as an auxiliary battery 1. Furthermore, along with widespread use of hybrid vehicles, plug-in hybrid vehicles, and electric vehicles anticipated in the near future, waste management problems associated with massive numbers of used driving batteries is also foreseeable. Therefore, there is significant advantage in a system that can recycle driving batteries still sufficiently usable in a different application.

### (Block Switches 12)

The auxiliary battery 1 has a plurality of battery blocks 10 connected in a manner that allows disconnection. Accordingly, each battery block 10 is provided with a block switch 12 that allows disconnection. When any type of malfunction occurs in a battery block 10 such as degradation of a component battery cell unit 11, the block switch 12 for that battery block 10 can be switched OFF to disconnect only the problem battery block 10 from the auxiliary battery 1. Consequently, auxiliary battery 1 operation can continue using the remaining battery blocks 10. In particular, for an auxiliary battery 1 that is a battery no longer used as a load battery LB, although battery cell unit 11 degradation can occur, the system can be conveniently used by disconnecting only a battery block 10 that becomes unusable. ON and OFF control of the block switches 12 can be performed, for example, by the battery control circuit 22. The battery control circuit 22 determines battery block 10 malfunction and lifetime from battery block 10 parameters such as battery temperature and remaining capacity, and notifies the first charging circuit 20 of battery block 10 disconnection specifying the disconnected battery block 10. In this manner, out of all the parallel-connected battery blocks 10, only the battery block 10 that includes a malfunctioning battery cell unit 11 is disconnected. This structure allows continued operation of the other battery blocks 10. Consequently, the system mean time between failures (MTBF) is increased, and the capability to exchange only the malfunctioning battery even during operation can be offered.

### (Charging with Late-Night Power)

It is particularly desirable to charge the auxiliary battery 1 via the first charging circuit 20 using late-night commercial power. This allows charging of the auxiliary battery 1 at night using low-rate power, allows charging to be completed by the next morning, and holds down power utility expenses. From the power company's perspective as well, this has the positive feature that it effectively uses surplus power generated at night and contributes to restraining the amount of power used during daytime peak-usage.

Charging power for the auxiliary battery 1 is controlled according to auxiliary battery 1 remaining capacity and the time period for late-night (low-rate) power. Specifically, the rate of power consumption during auxiliary battery 1 and load battery LB charging with late-night power is adjusted according to remaining battery capacity. For example, instead of rapid-charging using high currents, charging time is determined from remaining battery capacity to effectively utilize the time period for late-night power to slowly charge the auxiliary battery 1 with low current and also fully-charge the load battery LB by a given time. This type of charging can suppress generation of a late-night peak in power usage if many power utility customers attempt to charge auxiliary batteries 1 and load batteries LB with late-night power. Specifically, this type of charging tends to make the load on the power company uniform over the late-night power period and allows efficient power distribution. Control for this type of charging is performed by the battery control circuit 22. The battery control circuit 22 controls the charging current and charging time period according to the state of the auxiliary battery 1, for example, according to the remaining capacity and state of charge (SOC).

First charging circuit 20 charging of the auxiliary battery 1 with late-night power is performed automatically, not manually by the operator. Accordingly, a twenty-four-hour timer 24 can be provided in the first charging circuit 20 and/or in the battery control circuit 22.

From a different perspective, installation in each home of equipment, which can charge automotive driving batteries, can contribute to the distribution of environmentally-friendly vehicles that require charging such as electric vehicles and plug-in hybrid vehicles. Further, the present invention can limit the need for massive infrastructure investment to expand power generation and distribution to support rapid-charging equipment installed at numerous sites covering all areas.

The battery charging apparatus 100 of the present embodiment has many positive features compared to prior art charging apparatus. For example, as shown in Fig. 4, a prior art charging apparatus switches between charging the auxiliary battery and discharging the auxiliary battery to charge the driving battery. Therefore, the driving battery cannot be charged while charging the auxiliary battery, and switches are required. Practically, it is desirable to charge the auxiliary battery with late-night power from both the user and the power company's perspectives. Power generators cannot be completely stopped late at night and output power even when it cannot be used effectively. Charging the auxiliary battery with late-night power can effectively use this surplus power. From the user's perspective, the auxiliary battery can be inexpensively charged using low-rate, late-night power. Consequently, by charging the auxiliary battery with late-night power and charging the driving battery with the charged auxiliary battery, the driving battery can be rapidly-charged and power utility expenses associated with battery charging can be held to a low level. However, a charging apparatus that charges the auxiliary battery with late-night power and then switches to charging the driving battery with the auxiliary battery cannot charge the driving battery while charging the auxiliary battery. Furthermore, switching operations to switch between auxiliary battery charging and discharging are necessary. If switching is performed by the operator, it is necessary to first confirm that the auxiliary battery is charged making switching operations troublesome. It is also possible to perform switching operations, for example, under the control of a timer. However, in that case, switching times must be calculated based on the remaining capacities of the auxiliary battery and the driving battery, and computation becomes complex for accurate switching times. In contrast, the previously described battery charging apparatus 100 for the first embodiment can charge the auxiliary battery 1 and load battery LB without the need for switching operations. Further, even when charging with late-night power, optimal charging time can be set automatically according to the remaining capacities of the auxiliary battery 1 and the load battery LB enabling the load battery LB to be charged and ready-to-use by a given time the next morning.

Although the example above describes a home installed battery charging apparatus, the system is clearly not limited to the home and can be installed as battery charging infrastructure at sites such as gasoline stations and public offices as well. Further, the commercial power source AC is not limited to single-phase 100V or 200V power available in the home, and can also be three-phase power for example.

A specific example of the first charging circuit 20 in Fig. 1 is shown in Fig. 2. In this example, the first charging circuit 20 has an isolation transformer 28, and is an isolated current-controlled voltage circuit. The first charging circuit 20 has a bridge circuit 25 that rectifies commercial power, a capacitor 26 that smoothes the rectified waveform, and switching devices 27 connected in parallel between the capacitor 26 and the primary-side of the transformer 28. The switching devices 27 are bipolar transistors or field effect transistors (FETs) that switch ON and OFF to control the duty cycle. On the secondary-side of the transformer 28, transformer 28 power is rectified by a bridge circuit 29 and output after conditioning by an inductor 23 and capacitor 33. The output-side of the first charging circuit 20 is connected to the second charging circuit 30 and the auxiliary battery 1 respectively. In the first charging circuit 20, the duty cycle is changed by the switching devices 27 on the primary-side of the transformer 28 to control the value of the first charging current. Here, the first charging current is controlled to a value for a maximum power output of 5kW.

Adopting current-controlled charging of the auxiliary battery 1 has the positive feature that auxiliary battery 1 power can be supplied together with power supplied from the commercial power source AC through the first charging circuit 20. Specifically, for a DC voltage of 200V and an output charging power of 25kW (125A of charging current), 5kW of power can be drawn from the commercial power source AC and 20kW of power can be taken from the auxiliary battery 1. In that case, a current of 25A (5kW/200V) can flow from the commercial power source AC and a current of 100A (20kW/200V) can flow from the auxiliary battery 1. Here, the first charging circuit 20 outputs a constant 25A from the commercial power source AC and cannot supply any more than that. Accordingly, it is possible for the remaining 100A to be automatically discharged from the auxiliary battery 1. Further, since a current output charging circuit typically prevents reverse-current flow with a diode, it has the positive feature that there is no problem connecting the auxiliary battery 1 in parallel.

### (Second Embodiment)

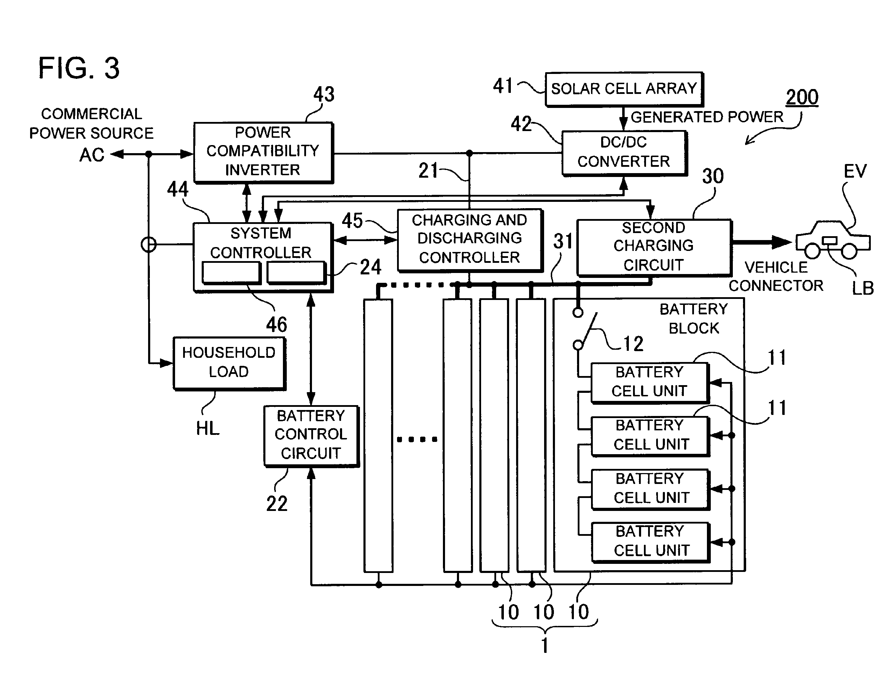

The embodiment above describes a system that uses commercial power as the only source of charging power. However, the present invention is not limited to that configuration and other sources of power can also be used in addition to, or in place of the commercial power source. For example, power generating systems that use renewable energy such as solar cells or fuel cells can be used as power sources. Fig. 3 shows a power source system employing a battery charging apparatus 200 for the second embodiment. In this figure, elements that are essentially the same as those in the first embodiment are labeled the same and their detailed description is omitted. Here, a system is described that combines an auxiliary battery 1 with a household power system, which has solar cells installed to power the household load HL or to sell power back to the electric company. This system makes possible operations that include using solar cell power to charge a load battery LB such as a vehicle driving battery or to charge the auxiliary battery 1, or using energy stored in the auxiliary battery 1 to power the household load HL or to sell power back to the electric company.

The system of Fig. 3 is provided with a solar cell array 41, a DC/DC converter 42 to convert power generated by the solar cell array 41, a power compatibility inverter 43 to integrate the DC power system based on the power from the DC/DC converter 42 with the alternating current (AC) commercial power system, a system controller 44 to control the power compatibility inverter 43, a charging and discharging controller 45 controlled by the system controller 44 to charge the auxiliary battery 1 with power from the power compatibility inverter 43 and the DC/DC converter 42, an auxiliary battery 1, a second charging circuit 30, and a battery control circuit 22. In this example, the system controller 44 and the charging and discharging controller 45 form a first charging circuit.

The solar cell array 41 can be a plurality of solar panels, and array output can be adjusted by the number of solar panels. The DC/DC converter 42 employs maximum power point tracking (MPPT) to efficiently extract power from the solar cell array 41 based on array current, voltage, and/or open circuit voltage. The power compatibility inverter 43 is a bi-directional circuit that links, integrates, and switches between the AC commercial power system and the solar power system (DC/DC converter 42 output-side). The power compatibility inverter 43 is controlled by the system controller 44. Here, the integrated DC power system is controlled to 360V DC.

The system controller 44 controls the power compatibility inverter 43 and also the charging and discharging controller 45 based on data from sources such as the battery control circuit 22, the power compatibility inverter 43, the charging and discharging controller 45, and the second charging circuit 30. The charging and discharging controller 45 has voltage step-up and step-down circuits, and steps-down and regulates voltage from the integrated DC power system to charge the auxiliary battery 1. Accordingly, the auxiliary battery 1 and the load battery LB can be charged by the solar cells as well as by the commercial power source AC. For example, the auxiliary battery charged by late-night power can be used to power the household load HL during the day. This raises power use efficiency to another level and can contribute to restraining peak-power usage during the day (particularly in mid-summer). Further, instead of immediately consuming power generated by the solar cells, that solar power can be stored in the auxiliary battery 1. Besides storing power to sell back to the power company, power can be stored in the auxiliary battery 1 for the system to use in the most effective manner depending on the system's own demands for that power. In addition, the system can be used as a backup power source at times that include power outages and natural disasters.

Since the battery charging apparatus of the present embodiment employs high-power DC circuitry, it is well suited for power generated by a solar cell array. A typical scenario for household power usage can be supposed where power is generated and stored during the day, and used to charge a vehicle after the operator returns home at the end of the day. In this scenario, the vehicle cannot be charged when the solar power system is generating power. With the system configuration described above, power generated during the day by the solar power system can be stored in the auxiliary battery 1, and the amount of commercial power consumed to charge the driving battery can be reduced.

### (Discharge Control Circuit)

The power compatibility inverter 43 also functions as a discharge control circuit that allows auxiliary battery 1 power to be supplied to the commercial power source AC. Specifically, auxiliary battery 1 voltage can be stepped-up by the charging and discharging controller 45 and sold to the power company. Power generated by the solar cells can be stored in the auxiliary battery 1, which is provided for charging the load battery LB. When solar power stored in the auxiliary battery 1 is not used to charge the load battery LB, it can be supplied to the commercial power utility. This allows other power utility customers to effectively use that solar generated power and essentially implements a "smart-grid" arrangement. Further, late-night power used to charge the auxiliary battery 1 can also be supplied to the commercial power utility when power consumption becomes high during daytime peak-usage times. This can enable the power utility to supply the required power to all customers without increasing daytime power generation. In most locations, the maximum load on the power utility occurs during the daytime in the summer. This is because air-conditioner power consumption becomes significant at those times. Accordingly, it is necessary to design power generating facilities capable of withstanding peak-power usage at those times. If peak-power can be reduced by supplying power stored in auxiliary batteries 1 to the power utility during the peak-usage times, power generating facility installation cost can be reduced. Further, operating a high output generating facility with light-loads is a cause of reduced power generating efficiency. Reducing the peak-power can equalize the load over time to reduce the periods of light-load operation, and this has the effect of improving power generating efficiency. The battery charging apparatus 200 does not employ a special dedicated battery for the purpose of reducing peak-power generation, but rather uses the auxiliary battery 1 provided for rapid-charging of the load battery LB. This can limit power generating facility peak-power while reducing overall equipment investment (including customer investment). In this manner, not only can power generated by the solar cells immediately be sold to the power company, but once power is stored in the auxiliary battery 1, it can be sold during a period of high demand contributing to a reduction in peak-power usage. Specifically, there is significant advantage for the power company in making household power loads more uniform over time. Furthermore, making the household power load more uniform reduces the electric bill and contributes to reducing expenses from the customer's viewpoint.

Further, if the load battery LB is not fully-charged and the auxiliary battery 1 has some remaining capacity, the battery control circuit 22 can control the transfer of power to the load battery LB. In particular, to sufficiently charge the auxiliary battery 1 with power generated by the solar cells, it is preferable to completely discharge the auxiliary battery 1 prior to beginning solar power generation. It is efficient to transfer that auxiliary battery 1 energy to the load battery LB. When the amount of power generated by the solar cells is anticipated to be greater than the power that can be used to charge the auxiliary battery 1 (which is the remaining capacity subtracted from the full-charge), that excess power can be transferred from the auxiliary battery 1 to charge the load battery LB. When it can be anticipated that the auxiliary battery 1 and load battery LB can be further charged even after charging with solar power, the remaining charging power can be supplemented with late-night power. When there is sufficient remaining capacity in the auxiliary battery 1 or there is sufficient remaining capacity in the load battery LB, the amount of late-night commercial power can be reduced during the fixed charging period. This allows peaks in late-night power use to be reduced.

### (Data Logging Device 46)

Further, a data logging device 46 can be provided to record solar cell charging power. Accordingly, by recording the power generated by the solar cells, solar power can be used in an optimal manner. The data logging device 46 can be included, for example, in the system controller 44.

To promote installation of solar power generating systems in the future, change in the unit price of power sold to, and purchased from the power company is possible, and the selling price is likely to increase. It that case, there could be more benefit from the customer's perspective in selling power rather than charging the auxiliary battery. However, it would then be necessary to purchase power to drive the battery-powered vehicle. In that case, the amount of auxiliary battery 1 charging by the solar power generating system can be recorded, and for purposes of equalizing power consumption over time, that amount of power can be considered equivalent to sold power.

The battery charging apparatus of the present invention can be used to advantage as battery charging equipment that charges a load battery in a vehicle such as an electric vehicle or plug-in hybrid vehicle. The battery charging apparatus is installed in the home and at sites such as a gasoline station as part of an energy infrastructure. In addition, the battery charging apparatus can also be used in an intelligent energy system that manages power in the home in a manner that essentially implements a "smart-grid" arrangement.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the spirit and scope of the invention as defined in the appended claims.

## Claims

1. A battery charging apparatus to charge an externally connected load battery (LB) comprising:
an auxiliary battery (1) that can be charged;
a first charging circuit (20) that can charge the auxiliary battery (1) with a first charging current derived from an externally connected commercial power source (AC); and
a second charging circuit (30) that can charge the load battery (LB) with a second charging current that is higher than the first charging current and is derived from power from the auxiliary battery (1), which is charged by the first charging circuit (20),
**characterized in that**
the first charging circuit (20) is connected to allow power supply to the auxiliary battery (1) and the second charging circuit (30).

2. The battery charging apparatus as cited in claim 1 wherein the first charging circuit (20) is configured to allow it to charge the load battery (LB) at the same time it is charging the auxiliary battery (1) with power from the commercial power source (AC).

3. The battery charging apparatus as cited in claim 1 or 2 provided with a battery control circuit (22) that controls charging of the auxiliary battery (1) by the first charging circuit (20); and the battery control circuit (22) controls charging current and charging time according to the state of the auxiliary battery (1).

4. The battery charging apparatus as cited in any one of the claims 1-3 wherein the power that the second charging circuit (30) uses to charge the load battery (LB) is two to ten times the power that the first charging circuit (20) uses to charge the auxiliary battery (1).

5. The battery charging apparatus as cited in claim 4 wherein the power used by the first charging circuit (20) to charge the auxiliary battery (1) is 2kVA to 6kVA, and the power used by the second charging circuit (30) to charge the load battery (LB) is greater than or equal to 20kVA.

6. The battery charging apparatus as cited in any one of the claims 1-5 wherein the first charging circuit (20) charges the auxiliary battery (1) with single-phase commercial power.

7. The battery charging apparatus as cited in any one of the claims 2-6 wherein the first charging circuit (20) is a constant current charging circuit.

8. The battery charging apparatus as cited in any one of the claims 1-7 provided with first transmission lines (21) from the commercial power source (AC) through the first charging circuit (20) to charge the auxiliary battery (1), and second transmission lines (31) from the auxiliary battery (1) through the second charging circuit (30) to charge the load battery (LB); and the second transmission lines (31) are lines capable of carrying high-power compared to the first transmission lines (21).

9. The battery charging apparatus as cited in any one of the claims 1-8 wherein charging of the auxiliary battery (1) with the first charging circuit (20) is performed using commercial power source (AC) late-night power.

10. The battery charging apparatus as cited in any one of the claims 3-9 wherein the battery control circuit (22) controls auxiliary battery (1) charging power according to the remaining capacity of the auxiliary battery (1) and the time period for late-night power.

11. The battery charging apparatus as cited in claim 9 or 10 wherein the first charging circuit (20) is provided with a twenty-four-hour timer (24) set to charge the auxiliary battery (1) with late-night power.

12. The battery charging apparatus as cited in claim 11 provided with a data logging device (46) to record solar cell power.

13. The battery charging apparatus as cited in claim 11 or 12 provided with a discharge control circuit that can supply auxiliary battery (1) power back to the commercial power source (AC).

14. The battery charging apparatus as cited in any one of the claims 1-13 wherein the auxiliary battery (1) uses rechargeable batteries from load batteries (LB) no longer in use.

15. The battery charging apparatus as cited in any one of the claims 1-14
wherein the auxiliary battery (1) is made up of a plurality of parallel-connected battery blocks (10), and
wherein the auxiliary battery (1) is configured with a plurality of battery blocks (10) connected in a manner that allows disconnection.
